(19) Europäisches Patentamt
European Patent Office
Office européen des brevets

(11) **EP 3 054 110 A1**

(12) **EUROPEAN PATENT APPLICATION**

(43) Date of publication:
**10.08.2016 Bulletin 2016/32**

(51) Int Cl.:
*F01D 25/02* (2006.01)   *F02C 7/04* (2006.01)

(21) Application number: **16154543.9**

(22) Date of filing: **05.02.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **06.02.2015   US 201514615543**

(71) Applicant: **United Technologies Corporation
Farmington, CT 06032 (US)**

(72) Inventors:
• **MCPHAIL, James J.
New London, CT Connecticut 06320 (US)**
• **HOGATE, Isaac Jon
Farmington, ME Maine 04938 (US)**
• **FILIPENCO, Victor G.
East Hartford, CT Connecticut 06108 (US)**

(74) Representative: **Hague, Alison Jane
Dehns
St Bride's House
10 Salisbury Square
London
EC4Y 8JD (GB)**

(54) **ICEPHOBIC FLOWPATH FOR A NOSE CONE**

(57)   A gas turbine engine (20) is provided having a nose cone (510), wherein the nose cone (510) is symmetrically disposed about an axis (A). The nose cone (510) includes a leading edge (512) and a base (514). A forward section (520) is disposed between the leading edge (512) and the base (514) and has a radius at any axial location defined by a first equation. A transition section (518) is disposed between the forward section (520) and the base (514) and has a radius at any axial location defined by a second equation. The first equation is different than the second equation.

Fig. 6

**Description**

**TECHNICAL FIELD OF THE DISCLOSED EMBODIMENTS**

The present disclosures relate generally to a gas turbine engine and, more particularly, to an icephobic flowpath for a nose cone of a gas turbine engine.

**BACKGROUND OF THE DISCLOSED EMBODIMENTS**

During flight, a gas turbine engine of an aircraft is exposed to low temperatures that may result in the formation of ice. Under icing conditions, ice will accrete (build up) on exposed surfaces of the airframe and engine components. This accretion disrupts air flow, thereby reducing aerodynamic efficiency. When the ice reaches a certain size and geometry, it sheds and is sent downstream by the air flow, posing a hazard to downstream components.

Often, the nose cone of the gas turbine engine may be coated with icephobic materials. However, icephobic materials tend to be more expensive and less durable than conventional materials. Another solution to ice buildup is to circulate hot air through the forward sections of the gas turbine engine. Unfortunately, hot air must be taken from the high pressure compressor and piped forward. Additional piping adds weight and complexity to the gas turbine engine. Additionally, piping hot air through to the forward sections of the gas turbine engine adds to the aerodynamic load on the gas turbine engine. Moreover, the engine components must be able to handle the added pressure and temperature from the hot air. Another solution to ice formation is to cover portions of the gas turbine engine with electro-thermal blankets. Generally, electro-thermal blankets add weight and cost to the gas turbine engine and must be electrically connected to the engine. In addition, the electro-thermal blankets must be physically in contact with and attached to the component that the blanket is warming. Accordingly, the blankets are difficult to repair and/or replace.

**SUMMARY OF THE DISCLOSED EMBODIMENTS**

In one aspect, a nose cone for a gas turbine engine is provided, wherein the nose cone is symmetrically disposed about an axis. The nose cone includes a leading edge and a base. A forward section is disposed between the leading edge and the base and has a radius at any axial location defined by a first equation. A transition section is disposed between the forward section and the base and has a radius at any axial location defined by a second equation. The first equation is different than the second equation.

In a further embodiment of the above, the transition section is defined by a Von Karman profile.

In a further embodiment of any of the above, the nose cone includes a length measured along the axis between the leading edge and the base, wherein the transition section is defined by the equation:

$$R = \frac{R_0}{\sqrt{\pi}} \sqrt{\theta - \frac{\sin(2\theta)}{2}} \, ,$$

wherein

$$\theta = \cos^{-1}\left(1 - \frac{2x^*}{L}\right) ,$$

wherein $R_0$, is a radius of the base of the nose cone, L is the length of the nose cone, $x^*$ is a position along the length of the nose cone, and R is a radius of the nose cone at the position $x^*$.

In a further embodiment of any of the above, the forward section has a spherical profile.

In a further embodiment of any of the above, the forward section has a blunt profile.

In a further embodiment of any of the above, the nose cone is coated with an icephobic material.

In a further embodiment of any of the above, the nose cone is formed from a metallic material.

In a further embodiment of any of the above, the nose cone is formed from a non-metallic material.

In one aspect, a gas turbine engine is provided having a fan for circulating airflow through the gas turbine engine. The fan has a hub and a nose cone is positioned on the hub of the fan. The nose cone is symmetrically disposed about an axis. The nose cone includes a leading edge and a base. A forward section is disposed between the leading edge and the base and has a radius at any axial location defined by a first equation. A transition section is disposed between the forward section and the base and has a radius at any axial location defined by a second equation. The first equation is different than the second equation.

In a further embodiment of the above, the transition section of the nose cone is defined by a Von Karman profile.

In a further embodiment of any of the above, the nose cone includes a length measured along the axis between the leading edge of the nose cone and the base of the nose cone, and the transition section is defined by the equation:

$$R = \frac{R_0}{\sqrt{\pi}} \sqrt{\theta - \frac{\sin(2\theta)}{2}} \, ,$$

wherein

$$\theta = \cos^{-1}\left(1 - \frac{2x^*}{L}\right),$$

wherein $R_0$ is a radius of the base of the nose cone, L is the length of the nose cone, $x^*$ is a position along the length of the nose cone, and R is a radius of the nose cone at the position $x^*$.

In a further embodiment of any of the above, the forward section of the nose cone has a spherical profile.

In a further embodiment of any of the above, the forward section of the nose cone has a blunt profile.

In a further embodiment of any of the above, the nose cone is coated with an icephobic material.

In a further embodiment of any of the above, the nose cone is formed from a metallic material.

In a further embodiment of any of the above, the nose cone is formed from a non-metallic material.

In one aspect, a nose cone for a gas turbine engine is provided. The nose cone is symmetrically disposed about an axis. The nose cone includes a leading edge and a base. A forward section is disposed between the leading edge and the base and has a first shape. A transition section is disposed between the forward section and the base and has a second shape. The first shape is less aerodynamic than the second shape, whereby streamlines of air flowing past the nose cone are closer to the transition section than to the forward section such that ice accretion is minimized on the forward section.

In a further embodiment of the above, the second shape is defined by a Von Karman profile.

In a further embodiment of any of the above, the nose cone includes a length measured along the axis between the leading edge and the base, wherein the second shape is defined by the equation:

$$R = \frac{R_0}{\sqrt{\pi}}\sqrt{\theta - \frac{\sin(2\theta)}{2}},$$

wherein

$$\theta = \cos^{-1}\left(1 - \frac{2x^*}{L}\right),$$

wherein $R_0$ is a radius of the base of the nose cone, L is the length of the nose cone, $x^*$ is a position along the length of the nose cone, and R is a radius of the nose cone at the position $x^*$.

In a further embodiment of any of the above, the first shape has a spherical profile

In one embodiment a nose cone for a gas turbine engine is provided. The nose cone symmetrically disposed about an axis and having:

> a leading edge;
> a base;
> a forward section disposed between the leading edge and the base and having a radius at any axial location defined by a first equation; and
> a transition section disposed between the forward section and the base and having a radius at any axial location defined by a second equation;
> wherein the first equation is different than the second equation.

In addition to one or more of the features described above, or as an alternative to any of the foregoing embodiments, the transition section may be defined by a Von Karman profile.

In addition to one or more of the features described above, or as an alternative to any of the foregoing embodiments, the nose cone may further comprise a length measured along the axis between the leading edge and the base, wherein the transition section is defined by the equation:

$$R = \frac{R_0}{\sqrt{\pi}}\sqrt{\theta - \frac{\sin(2\theta)}{2}},$$

$$\theta = \cos^{-1}\left(1 - \frac{2x^*}{L}\right)$$

wherein ,wherein $R_0$ is a radius of the base of the nose cone, L is the length of the nose cone, $x^*$ is a position along the length of the nose cone, and R is a radius of the nose cone at the position $x^*$.

In addition to one or more of the features described above, or as an alternative to any of the foregoing embodiments, the forward section may have a spherical profile.

In addition to one or more of the features described above, or as an alternative to any of the foregoing embodiments, the forward section may have a blunt profile.

In addition to one or more of the features described above, or as an alternative to any of the foregoing embodiments, the nose cone may be coated with an icephobic material.

In addition to one or more of the features described above, or as an alternative to any of the foregoing embodiments, the nose cone may be formed from a metallic material.

In addition to one or more of the features described above, or as an alternative to any of the foregoing embodiments, the nose cone may be formed from a non-metallic material.

In yet another embodiment a gas turbine engine is provided. The gas turbine engine having:

> a fan for circulating airflow through the gas turbine engine, the fan having a hub; and
> a nose cone positioned on the hub of the fan, the nose cone symmetrically disposed about an axis, the nose cone comprising:
>
>> a leading edge;
>> a base;
>> a forward section disposed between the leading edge and the base and having a radius at any axial location defined by a first equation; and
>> a transition section disposed between the forward section and the base and having a radius at any axial location defined by a second equation;
>> wherein the first equation is different than the second equation.

In addition to one or more of the features described above, or as an alternative to any of the foregoing embodiments, the transition section of the nose cone may be defined by a Von Karman profile.

In addition to one or more of the features described above, or as an alternative to any of the foregoing embodiments, the gas turbine engine may further comprise a length measured along the axis between the leading edge of the nose cone and the base of the nose cone, wherein the transition section is defined by the equation:

$$R = \frac{R_0}{\sqrt{\pi}}\sqrt{\theta - \frac{\sin(2\theta)}{2}}$$

wherein

$$\theta = \cos^{-1}\left(1 - \frac{2x^*}{L}\right)$$

,wherein $R_0$ is a radius of the base of the nose cone, L is the length of the nose cone, $x^*$ is a position along the length of the nose cone, and R is a radius of the nose cone at the position $x^*$.

In addition to one or more of the features described above, or as an alternative to any of the foregoing embodiments, the forward section of the nose cone may have a spherical profile.

In addition to one or more of the features described above, or as an alternative to any of the foregoing embodiments, the forward section of the nose cone may have a blunt profile.

In addition to one or more of the features described above, or as an alternative to any of the foregoing embodiments, the nose cone may be coated with an icephobic material.

In addition to one or more of the features described above, or as an alternative to any of the foregoing embodiments, the nose cone may be formed from a metallic material.

In addition to one or more of the features described above, or as an alternative to any of the foregoing embodiments, the nose cone may be formed from a non-metallic material.

In yet another embodiment a nose cone for a gas turbine engine is provided. The nose cone symmetrically disposed about an axis and having:

> a leading edge;
> a base;
> a forward section disposed between the leading edge and the base and having a first shape; and
> a transition section disposed between the forward section and the base and having a second shape;
> wherein the first shape is less aerodynamic than the second shape, whereby streamlines of air flowing past the nose cone are closer to the transition section than to the forward section such that ice accretion is minimized on the forward section.

In addition to one or more of the features described above, or as an alternative to any of the foregoing embodiments, the second shape may be defined by a Von Karman profile.

In addition to one or more of the features described above, or as an alternative to any of the foregoing embodiments, the nose cone may further comprise a length measured along the axis between the leading edge and the base, wherein the second shape is defined by the equation:

$$R = \frac{R_0}{\sqrt{\pi}}\sqrt{\theta - \frac{\sin(2\theta)}{2}}$$ ,

wherein

$$\theta = \cos^{-1}\left(1 - \frac{2x^*}{L}\right)$$

,wherein $R_0$ is a radius of the base of the nose cone, L is the length of the nose cone, x* is a position along the length of the nose cone, and R is a radius of the nose cone at the position x*.

In addition to one or more of the features described above, or as an alternative to any of the foregoing embodiments, the first shape may have a spherical profile.

Other embodiments are also disclosed.

## BRIEF DESCRIPTION OF THE DRAWINGS

The embodiments and other features, advantages and disclosures contained herein, and the manner of attaining them, will become apparent and the present disclosure will be better understood by reference to the following description of various exemplary embodiments of the present disclosure taken in conjunction with the accompanying drawings, wherein:

FIG. 1 is a sectional view of a gas turbine engine in an embodiment; and

FIG. 2 is a schematic of stagnant air formed upstream from a nose cone having a pointed forward end.

FIG. 3 is a schematic view of stagnant air formed upstream from a nose cone having a blunt forward end.

FIG. 4 is a graph showing ice formation along a nose cone having a pointed forward end.

FIG. 5 is a graph showing ice formation along a nose cone having a blunt forward end.

FIG. 6 is a graph illustrating the dimensions of various nose cones.

## DETAILED DESCRIPTION OF THE DISCLOSED EMBODIMENTS

For the purposes of promoting an understanding of the principles of the present disclosure, reference will now be made to the embodiments illustrated in the drawings, and specific language will be used to describe the same. It will nevertheless be understood that no limitation of the scope of this disclosure is thereby intended.

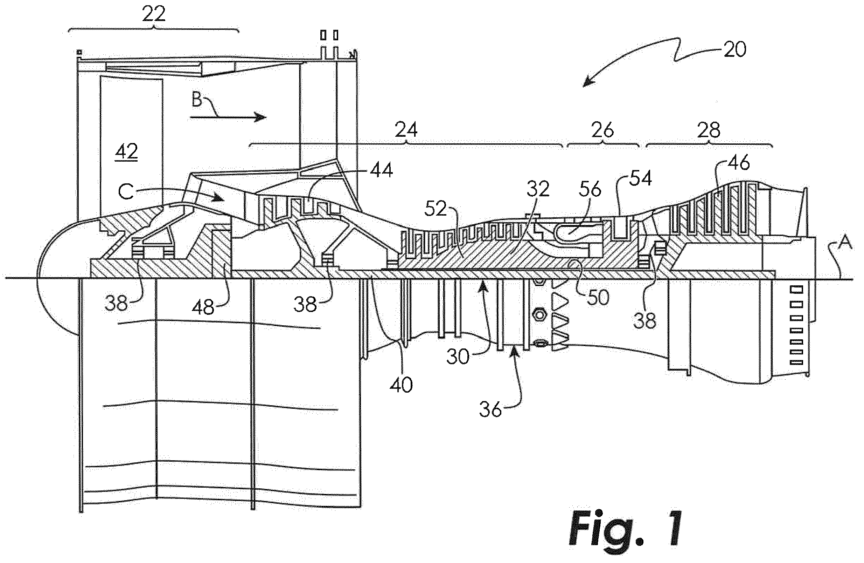

FIG. 1 shows a gas turbine engine 20, such as a gas turbine used for power generation or propulsion, circumferentially disposed about an engine centerline, or axial centerline axis A. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,688 meters). The flight condition of 0.8 Mach and 35,000 ft. (10,688 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]$^{0.5}$. The "Low corrected fan tip speed" as disclosed herein according to one non-limiting embodiment is less than about 1150 ft / second (350.5 m/sec).

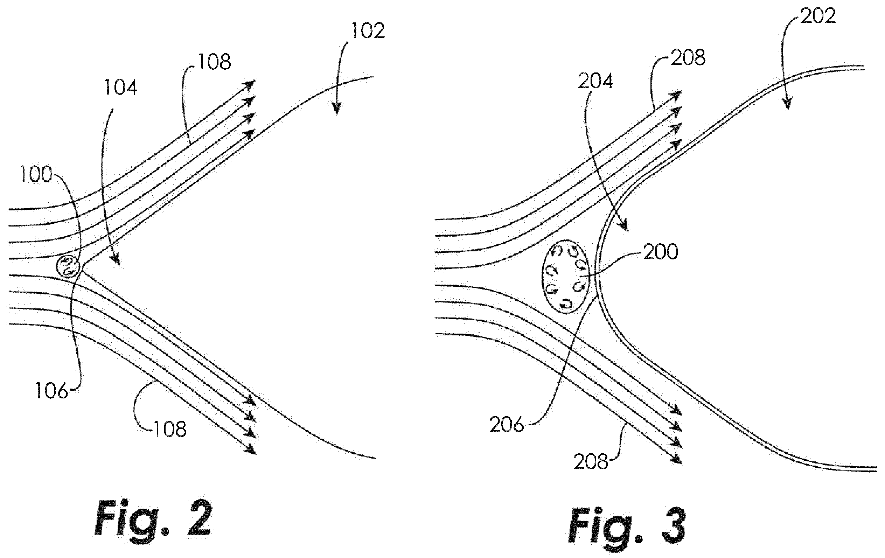

FIG. 2 is a schematic of stagnant airflow 100 formed upstream from a nose cone 102 having a pointed forward end 104. Generally, the thickest ice accumulation occurs at a leading edge 106 of a nose cone 102 independent of the shape of the nose cone 102. In the embodiment illustrated of FIG. 2, the sharp point of the forward end 104 of the nose cone 102 creates airflow 108 around the nose cone 102 that travels adjacent to the contour of the nose cone 102 approximately the entire length of the nose cone 102. The airflow 108 creates a small pocket of stagnant airflow 100 upstream from the nose cone 102. Smaller stagnant airflow 100 causes ice crystals to form on the nose cone 102.

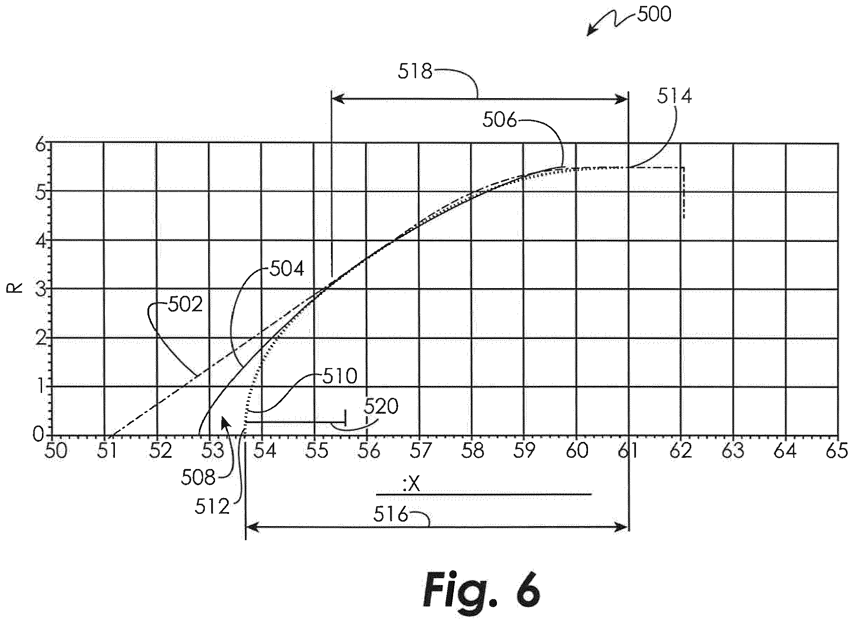

FIG. 3 is a schematic of stagnant airflow 200 formed upstream from a nose cone 202 having a blunt forward end 204. In the embodiment illustrated of FIG. 3, the blunt forward end 204 of the nose cone 202 creates streamlines 208 that are more distant from the contour of a leading edge 206 of the nose cone 202 than from the contour of the nose cone 202 further downstream, such as the more aerodynamic contour of a transition section 518 discussed hereinbelow with respect to FIG. 6. The airflow 208 forms in a bow wave that creates a larger pocket of stagnant airflow 200 upstream from the nose cone 202. Larger stagnant airflow 200 causes super cooled droplets to nucleate and form ice crystals prior to contact with the nose cone 202. The ice crystals deflect into the airflow 208 without accreting on the nose cone 202. Accordingly, the larger area of stagnant airflow 200 for the blunt shape minimizes an opportunity for icing on the nose cone 202.

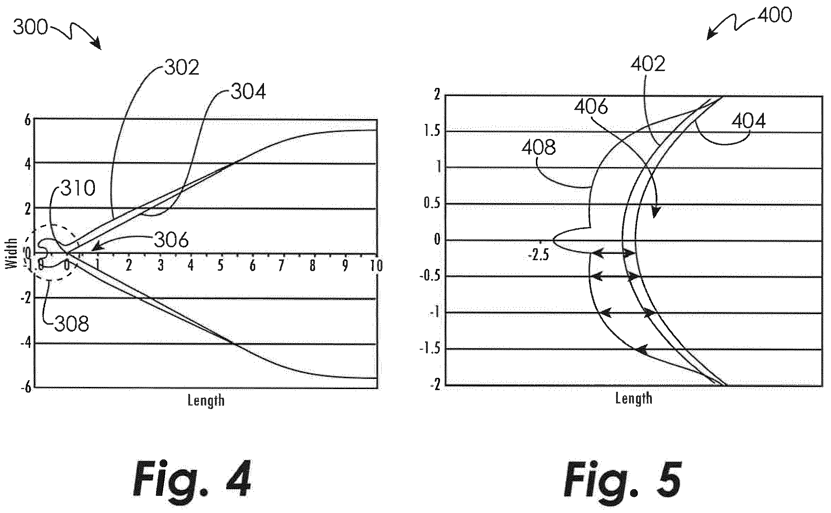

FIG. 4 is a graph 300 showing ice formation 302 along a nose cone 304 having a pointed forward end 306. Specifically, FIG. 4 shows the ice formation 302 after operating an engine containing the nose cone 304 for thirty minutes. A portion 308 of the ice formation 302 occurs directly upstream from the leading edge 310 of the nose cone 304. The remainder of the ice formation occurs along the contour of the nose cone 304. The ice formation 302 directly upstream from the leading edge 310 results in ice crystals forming on the nose cone 304.

FIG. 5 is a graph 400 showing ice formation 402 along a nose cone 404 having a blunt forward end 406 after operating an engine containing the nose cone 404 for nine minutes, and ice formation 408 along the nose cone 404 after operating the engine for thirty minutes. After nine minutes of engine operation, the ice formation 402 occurs upstream from the contour of the nose cone 404. As the engine continues to operate, stagnant airflow continues to form causing the ice formation 408 after thirty minutes to occur further upstream from the nose cone 404. The larger stagnant airflow causes super cooled droplets to nucleate and form ice crystals prior to contact with the nose cone 404. The ice crystals deflect into the airflow around the nose cone 404 without accreting on the nose cone 404. Accordingly, the blunt profile of the nose cone 404 minimizes an opportunity for icing on the nose cone 404.

FIG. 6 is a graph 500 illustrating the dimensions of various nose cones. A first nose cone 502 has a pointed profile. As set forth above, the pointed profile increases the likelihood of ice formation on the nose cone 502. However, the pointed profile also increases the aerodynamics of the nose cone 502. A second nose cone 504 utilizes a Von Karman profile that has minimum drag for a given length and width of nose cone. In general, a Von Karman profile is formed by the equation:

$$R = \frac{R_0}{\sqrt{\pi}} \sqrt{\theta - \frac{\sin(2\theta)}{2}},$$

wherein

$$\theta = \cos^{-1}\left(1 - \frac{2x^*}{L}\right),$$

wherein $R_0$ is a radius of a base 506 of the nose cone 504, L is a length of the nose cone 504 defined between a leading edge and a base of the nose cone, $x^*$ is a position along the length of the nose cone 504, and R is a radius of the nose cone 504 at the position $x^*$.

FIG. 6 also illustrates a nose cone 510 having a leading edge 512, a base 514, and a length 516 defined between the leading edge 512 and the base 514. The nose cone is symmetrically disposed about an axis. The nose cone 510 includes a transition section 518 defined between the leading edge 512 and the base 514. In one embodiment, the transition section 518 is defined at an intermediate position between the leading edge 512 and the base 514. The nose cone 510 also includes a forward section 520 defined between the leading edge 512 and the transition section 518.

In one embodiment, the forward section 520 has a radius at any axial location defined by a first equation. In one embodiment, the forward section has an icephobic profile. For example, in one embodiment, the forward section 520 has a blunt profile. In one embodiment, the forward section 520 has a spherical profile. In one embodiment, the transition section 518 has a radius at any axial location defined by a second equation that is different from the first equation. In one embodiment, the transition section 518 is formed with an aerodynamic profile. In one embodiment, the transition section 518 is defined by a Von Karman profile defined by the equation:

$$R = \frac{R_0}{\sqrt{\pi}}\sqrt{\theta - \frac{\sin(2\theta)}{2}},$$

wherein

$$\theta = \cos^{-1}\left(1 - \frac{2x^*}{L}\right),$$

wherein $R_0$ is a radius of the base 514 of the nose cone 510, L is the length 516 of the nose cone 510, $x^*$ is a position along the length 516 of the nose cone 510, and R is a radius of the nose cone 510 at the position $x^*$. In one embodiment, the nose cone 510 is coated with an icephobic material to further reduce ice formation thereon. In one embodiment, the nose cone 510 may be formed from any material, for example a metallic material or a non-metallic material.

The modified profile of the nose cone 510 causes increased stagnant airflow upstream from the nose cone 510. Accordingly, ice crystals form upstream from the nose cone 510, rather than forming on the nose cone 510 itself. The nose cone 510 reduces ice formation in comparison to nose cones having a complete Von Karman profile, while also providing increased aerodynamic efficiency in comparison to a nose cone having a completely spherical profile.

The profile of the nose cone 510 includes two aspects: 1. the blunt (defined herein as spherical or near spherical) shape of the forward section 520 for the reduction of ice accretion; and 2. the transition section 518 connecting the forward section 520 of the nose cone 510 to a downstream portion of an engine inlet hub flowpath to provide a relatively low total pressure (Pt) loss. It should be noted that the ice rejection property of the spherical shape of can be realized without the transition section 518 (i.e. if the entire nose cone were defined as a simple hemisphere). However, when defining the entire nose cone as a hemisphere, a region of high Mach number develops in the air flow over the spherical surface near the junction of the spherical shape and the base. This results in a relatively high total pressure loss. The high total pressure loss causes a loss of efficiency of an engine compression system, thereby leading to an increase in engine specific fuel consumption. Accordingly, the aerodynamic shape of the transition section 518 is provided to reduce the peak Mach number over the surface of the nose cone and reduce the total pressure (Pt) loss. It should be noted that the Von Karman shape of the transition section 518 is only one embodiment of the nose cone 510. In general, the transition section 518 of the nose cone 510 can be defined as any shape which reduces Pt loss by reducing regions of high Mach number over the length 516 of the nose cone 510 as compared to a hemispherical nose cone.

While the invention has been illustrated and described in detail in the drawings and foregoing description, the same is to be considered as illustrative and not restrictive in character, it being understood that only certain embodiments have been shown and described and that all changes and modifications that come within the scope of the invention are desired to be protected.

The following clauses set out features of the invention which may or may not presently be claimed in this application, but which may form the basis for future amendment or a divisional application.

1. A nose cone for a gas turbine engine, the nose cone symmetrically disposed about an axis, the nose cone comprising:

a leading edge;
a base;
a forward section disposed between the leading edge and the base and having a radius at any axial location defined by a first equation; and

a transition section disposed between the forward section and the base and having a radius at any axial location defined by a second equation;

wherein the first equation is different than the second equation.

2. The nose cone of clause 1, wherein the transition section is defined by a Von Karman profile.

3. The nose cone of clause 1, further comprising a length measured along the axis between the leading edge and the base, wherein the transition section is defined by the equation:

$$R = \frac{R_0}{\sqrt{\pi}} \sqrt{\theta - \frac{\sin(2\theta)}{2}}$$

,

wherein

$$\theta = \cos^{-1}\left(1 - \frac{2x^*}{L}\right)$$

,wherein $R_0$ is a radius of the base of the nose cone, L is the length of the nose cone, $x^*$ is a position along the length of the nose cone, and R is a radius of the nose cone at the position $x^*$.

4. The nose cone of clause 1, wherein the forward section has a spherical profile.

5. The nose cone of clause 1, wherein the forward section has a blunt profile.

6. The nose cone of clause 1, wherein the nose cone is coated with an icephobic material.

7. The nose cone of clause 1, wherein the nose cone is formed from a metallic material.

8. The nose cone of clause 1, wherein the nose cone is formed from a non-metallic material.

9. A gas turbine engine comprising:

a fan for circulating airflow through the gas turbine engine, the fan having a hub; and
a nose cone positioned on the hub of the fan, the nose cone symmetrically disposed about an axis, the nose cone comprising:

a leading edge;
a base;
a forward section disposed between the leading edge and the base and having a radius at any axial location defined by a first equation; and
a transition section disposed between the forward section and the base and having a radius at any axial location defined by a second equation;

wherein the first equation is different than the second equation.

10. The gas turbine engine of clause 9, wherein the transition section of the nose cone is defined by a Von Karman profile.

11. The gas turbine engine of clause 9 further comprising a length measured along the axis between the leading edge of the nose cone and the base of the nose cone, wherein the transition section is defined by the equation:

$$R = \frac{R_0}{\sqrt{\pi}} \sqrt{\theta - \frac{\sin(2\theta)}{2}}$$

,

wherein

$$\theta = \cos^{-1}\left(1 - \frac{2x^*}{L}\right)$$

,wherein $R_0$ is a radius of the base of the nose cone, L is the length of the nose cone, $x^*$ is a position along the length of the nose cone, and R is a radius of the nose cone at the position $x^*$.

12. The gas turbine engine of clause 9, wherein the forward section of the nose cone has a spherical profile.

13. The gas turbine engine of clause 9, wherein the forward section of the nose cone has a blunt profile.

14. The gas turbine engine of clause 9, wherein the nose cone is coated with an icephobic material.

15. The gas turbine engine of clause 9, wherein the nose cone is formed from a metallic material.

16. The gas turbine engine of clause 9, wherein the nose cone is formed from a non- metallic material.

17. A nose cone for a gas turbine engine, the nose cone symmetrically disposed 10 about an axis, the nose cone comprising:

a leading edge;
a base;
a forward section disposed between the leading edge and the base and having a first shape; and
15 a transition section disposed between the forward section and the base and having a second shape;
wherein the first shape is less aerodynamic than the second shape, whereby streamlines of air flowing past the nose cone are closer to the transition section than to the forward section such that ice accretion is minimized on the 20 forward section.

18. The nose cone of clause 17, wherein the second shape is defined by a Von Karman profile.
19. The nose cone of clause 17, further comprising a length measured along the axis between the leading edge and the base, wherein the second shape is defined 25 by the equation:

$$R = \frac{R_0}{\sqrt{\pi}} \sqrt{\theta - \frac{\sin(2\theta)}{2}}$$

,

wherein

$$\theta = \cos^{-1}\left(1 - \frac{2x^*}{L}\right)$$

,wherein $R_0$ is a radius of the base of the nose cone, L is the length of the nose cone, x* is a position along the length of the nose cone, and R is a radius of the nose cone at the position x*.
20. The nose cone of clause 17, wherein the first shape has a spherical profile.

**Claims**

1. A nose cone (510) for a gas turbine engine, the nose cone symmetrically disposed about an axis, the nose cone (510) comprising:

a leading edge (512);
a base (514);
a forward section (520) disposed between the leading edge (512) and the base (514) and having a radius at any axial location defined by a first equation; and
a transition section (518) disposed between the forward section (520) and the base (514) and having a radius at any axial location defined by a second equation;
wherein the first equation is different than the second equation.

2. The nose cone (510) of claim 1, wherein the transition section (518) is defined by a Von Karman profile.

3. The nose cone (510) of claim 1, further comprising a length measured along the axis between the leading edge (512) and the base (514), wherein the transition section (518) is defined by the equation:

$$R = \frac{R_0}{\sqrt{\pi}} \sqrt{\theta - \frac{\sin(2\theta)}{2}}$$

,

wherein

$$\theta = \cos^{-1}\left(1 - \frac{2x^*}{L}\right)$$

,wherein $R_0$ is a radius of the base (514) of the nose cone (510), L is the length (516) of the nose cone (510), x* is a position along the length (516) of the nose cone (510), and R is a radius of the nose cone (510) at the position x*.

4. The nose cone (510) of claim 1, 2 or 3, wherein the forward section (520) has a spherical profile.

5. The nose cone (510) of claim 1, 2 or 3, wherein the forward section (520) has a blunt profile.

6. The nose cone (510) of any preceding claim, wherein the nose cone (510) is coated with an icephobic material.

7. The nose cone (510) of any preceding claim, wherein the nose cone (510) is formed from a metallic material.

8. The nose cone (510) of any of claims 1 to 6, wherein the nose cone (510) is formed from a non-metallic material.

9. A gas turbine engine (20) comprising:

a fan (42) for circulating airflow through the gas turbine engine (10), the fan (42) having a hub; and
a nose cone (510) as claimed in any of claims 1 to 8 positioned on the hub of the fan (42).

10. A nose cone (510) for a gas turbine engine (20), the nose cone (510) symmetrically disposed about an axis, the nose cone (510) comprising:

a leading edge (512);
a base (514);
a forward section (520) disposed between the leading edge (512) and the base (514) and having a first shape; and

a transition section (518) disposed between the forward section (520) and the base (514) and having a second shape;

wherein the first shape is less aerodynamic than the second shape, whereby streamlines (208) of air flowing past the nose cone (510) are closer to the transition section (518) than to the forward section (520) such that ice accretion is minimized on the forward section (520).

11. The nose cone (510) of claim 10, wherein the second shape is defined by a Von Karman profile.

12. The nose cone (510) of claim 10, further comprising a length measured along the axis between the leading edge (512) and the base (514), wherein the second shape is defined by the equation:

$$R = \frac{R_0}{\sqrt{\pi}}\sqrt{\theta - \frac{\sin(2\theta)}{2}}$$

,

wherein

$$\theta = \cos^{-1}\left(1 - \frac{2x^*}{L}\right)$$

,wherein $R_0$ is a radius of the base (514) of the nose cone (510), L is the length (516) of the nose cone (510), $x^*$ is a position along the length (516) of the nose cone (510), and R is a radius of the nose cone (510) at the position $x^*$.

13. The nose cone (510) of claim 10, 11 or 12, wherein the first shape has a spherical profile,

*Fig. 1*

**Fig. 2**

**Fig. 3**

EP 3 054 110 A1

Fig. 5

Fig. 4

**Fig. 6**

Europäisches
Patentamt

European
Patent Office

Office européen
des brevets

# EUROPEAN SEARCH REPORT

Application Number

EP 16 15 4543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/016999 A1 (LUNSFORD PATRICK L [US] ET AL) 15 January 2015 (2015-01-15) * paragraph [0022]; figure 2 * ----- | 1,4-10, 13 | INV. F01D25/02 F02C7/04 |
| X | DING FENG ET AL: "Novel approach for design of a waverider vehicle generated from axisymmetric supersonic flows past a pointed von Karman ogive", AEROSPACE SCIENCE AND TECHNOLOGY, vol. 42, 2 February 2015 (2015-02-02), pages 297-308, XP029204614, ISSN: 1270-9638, DOI: 10.1016/J.AST.2015.01.025 * paragraph [02.1]; figure 3 * ----- | 1-3,6-9 | |
| X | Anonymous: "Nose cone design", Wikipedia, 30 December 2014 (2014-12-30), pages 1-9, XP055282387, Retrieved from the Internet: URL:https://en.wikipedia.org/w/index.php?title=Nose_cone_design&oldid=640242417 [retrieved on 2016-06-21] * page 2 - page 4 * * page 6 - page 7 * ----- | 1,4-10, 13 | TECHNICAL FIELDS SEARCHED (IPC) F01D F02C F02K B64D |
| X | 1996 ET AL: "THE DESCRIPTIVE GEOMETRY OF NOSE CONES", , 31 December 1996 (1996-12-31), pages 1-15, XP055282251, Retrieved from the Internet: URL:https://web.archive.org/web/20110411143013/http://www.if.sc.usp.br/~projetosulfos/artigos/NoseCone_EQN2.PDF [retrieved on 2016-06-21] * page 2 * * page 6 * ----- | 1,6-10 | |

-/--

The present search report has been drawn up for all claims

| Place of search | Date of completion of the search | Examiner |
|---|---|---|
| The Hague | 21 June 2016 | Robelin, Bruno |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 16 15 4543

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/000304 A1 (LINDSEY ANTHONY T [US] ET AL) 1 January 2015 (2015-01-01) * paragraph [0019]; figure 2 * ----- | 1-13 | |

TECHNICAL FIELDS
SEARCHED    (IPC)

The present search report has been drawn up for all claims

| Place of search | Date of completion of the search | Examiner |
|---|---|---|
| The Hague | 21 June 2016 | Robelin, Bruno |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ......................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 16 15 4543

This annex lists the patent family members relating to the patent documents cited in  the above-mentioned European search report.
The members are as contained in the European Patent Office EDP file on
The European Patent Office is in no way liable for these particulars which are merely given for the purpose of information.

21-06-2016

| Patent document cited in search report | Publication date | Patent family member(s) | Publication date |
|---|---|---|---|
| US 2015016999 A1 | 15-01-2015 | US 2015016999 A1<br>WO 2014163702 A2 | 15-01-2015<br>09-10-2014 |
| US 2015000304 A1 | 01-01-2015 | NONE | |

EPO FORM P0459

For more details about this annex : see Official Journal of the European Patent Office, No. 12/82